# EUROPEAN PATENT APPLICATION

(11) **EP 4 761 297 A1**
(43) Date of publication of application: **17.06.2026**
(21) Application number: 25218660.6
(22) Date of filing: 26.11.2025
(51) Int. Cl.: H04W 4/02, G01S 5/02, H04W 64/00

(54) **DETERMINING LOCATION IN A FACILITY USING BEACONING**

(30) Priority: 16.12.2024 US 202418982039
(71) Applicant: Honeywell International Inc., Charlotte, NC 28202 (US)
(72) Inventor: WOLF, Benjamin Henry, Charlotte, 28202 (US); BARSON, Michael, Charlotte, 28202 (US); ZENG, Suqing, Charlotte, 28202 (US); ISLAM, Shah Md Anwarul, Charlotte, 28202 (US); RYAN, Michael G., Charlotte, 28202 (US)
(74) Representative: Haseltine Lake Kempner LLP

(57) **Abstract**

Devices, methods, and systems for determining location in a facility using beaconing are described herein. One method includes generating a 3D model of a facility, including, in the model, 3D mappings of a plurality of radio signals respectively associated with a plurality of wireless beacons in the facility, and determining a location of a person carrying a mobile device based, at least in part, on a correlation between a strength of a signal received by the mobile device and the model.

## Description

### Technical Field

The present disclosure relates generally to devices, methods, and systems for determining location in a facility using beaconing.

### Background

Large facilities (e.g., buildings), such as commercial facilities, office buildings, hospitals, and the like, may have an alarm system that can be triggered during an emergency situation (e.g., a fire) to warn occupants to evacuate. For example, an alarm system may include a control panel and a plurality of event monitoring and detection devices located throughout the facility (e.g., on different floors and/or in different rooms of the facility) that can sense an event occurring in the facility and provide a notification of the event to the occupants of the facility via alarms.

Some event monitoring and detection devices include a self-test functionality. Some event monitoring and detection devices include beaconing technology.

### Brief Description of the Drawings

Figure 1 illustrates a block diagram of an event monitoring and detection device in accordance with one or more embodiments of the present disclosure.
Figure 2 illustrates a portion of an example of an event monitoring and detection device in accordance with one or more embodiments of the present disclosure.
Figure 3 illustrates a block diagram of an alarm system in accordance with one or more embodiments of the present disclosure.
Figure 4 illustrates a system for determining location in a facility using beaconing in accordance with an embodiment of the present disclosure.
Figure 5 is a cross-sectional view of a portion of a facility having beacons installed therein for determining location within the facility in accordance with an embodiment of the present disclosure.
Figure 6 is an example of a computing device for determining location in a facility using beaconing, in accordance with one or more embodiments of the present disclosure.

### Detailed Description

Devices, methods, and systems for determining location in a facility using beaconing are described herein. One method includes generating a 3D model of a facility, including, in the model, 3D mappings of a plurality of radio signals respectively associated with a plurality of wireless beacons in the facility, and determining a location of a person carrying a mobile device based, at least in part, on a correlation between a strength of a signal received by the mobile device and the model.

Some event monitoring and detection devices (sometimes referred to herein simply as "detectors" or "devices") can utilize a self-test procedure. The self-test procedure can be an automatic procedure performed by an event monitoring and detection device without a user, such as a maintenance engineer or other type of user. The self-test procedure can therefore allow event monitoring and detection devices to be tested, even if such event monitoring and detection devices are remotely located and/or difficult to access. The self-test procedure can include generating a test medium and providing the test medium to a test chamber for sensing. The test medium can be provided from a self-test module included in the event monitoring and detection device. It is noted that while the specific examples of detectors having a self-test module, or those that can perform a self-test procedure, are described herein, embodiments of the present disclosure are not limited to detectors having self-test capabilities.

Some event monitoring and detection devices utilize beaconing technology. Beaconing technology can allow these devices to determine whether a person (or people) is in the room. For instance, beaconing technology can be used to determine the probable proximity of a person. On a larger scale, beaconing technology can be used to determine what rooms or areas within a facility contain one or more people.

In some embodiments, a person may be carrying a personal locator beacon configured to communicate a signal to a receiver (e.g., a Bluetooth Low Energy (BLE) receiver) associated with the detector. In some embodiments, the person is carrying an internet-connected BLE receiver configured to receive BLE signal from a detector and communicate with a remote computing device (e.g., a cloud computing device). Beaconing technology may involve determining received signal strength indicator (RSSI) values from beaconing devices. Where the term "beacon" is used herein, it is to be understood that such usage may refer to a transmitter and/or a receiver. Furthermore, while the example of BLE is referred to occasionally herein, embodiments of the present disclosure are not limited to BLE communications. That is, embodiments herein include any suitable wireless beaconing technology.

The issues faced by previous approaches to determining location using beaconing commonly arise when marginal and/or competing RSSI values are received. These can be caused due to competing signals from adjacent rooms or from adjacent floors, for instance. If the competing signals are stronger, previous approaches may mistake a person as being in the wrong room and/or the wrong floor. Because, for instance, field strengths of BLE beacons commonly vary over time, the correct beacon may have a lower field strength at a particular moment in time than one on an adjacent room and/or floor.

When signals are interpreted incorrectly, the impacts may be significant. For instance, if a person has generated an emergency alert, or if a vulnerable person is being tracked to provide them with additional support in the event of a potential emergency, first responders may proceed to the wrong room and/or floor. In such cases, the chances of injury and/or loss of life are increased, perhaps significantly.

Embodiments of the present disclosure improve the determination of location using beaconing in a number of ways. In some embodiments, a three-dimensional (3D) model is generated from a design of a fire system installed in the facility. The model can include mappings of receiver strengths throughout the facility. These mappings can be extracted and used to determine probable locations of people carrying mobile devices in the facility based on RSSI values of signals received by those devices.

Some embodiments include tracking historic movements of people throughout the facility over a period of time. In some embodiments, these movements can be used to determine movement patterns, including floors and/or rooms commonly (or rarely) entered by each of those people. In some cases, if an alert is raised and the location of the person determined using the beacons does not logically follow from their recently tracked location(s), embodiments herein can determine that they are probably not at that location. For instance, if a person did not receive full RSSI strength from entering a particular floor prior to an alert being raised, embodiments herein can determine that they are probably not on that floor, and can use other RSSI values to determine their probable location.

As previously discussed, field strength at a fixed location can vary over time. Embodiments of the present disclosure can reduce (e.g., minimize) the potential shortcomings of this phenomenon by determining an average RSSI strength over a period of time at a fixed location. Accordingly, anomalous readings can be filtered.

In some embodiments, the volume of beacons signaling can be utilized to determine location. Stated differently, embodiments herein can utilize more than one RSSI value simultaneously. For instance, even if one RSSI value, associated with a beacon on a first floor, is strong, multiple RSSI values received from a second floor may indicate that the person is located on the second floor, even if these signals are each weaker.

In some embodiments, location determination is improved by performing a calibration procedure. Such a procedure can include, for instance, walking through the facility, collecting signal strength values from predefined spaces, and associating those values with those spaces in the model.

To further improve location determination by calibration, embodiments herein can include configuring antenna directional orientation and/or strength in a particular manner. For instance, antennas of beacons can be pointed downwards (e.g., to limit leakage to floors above the ceiling on which the beacons are installed), and signal strength can be attenuated in places where a stronger signal leaks to adjacent rooms.

In some embodiments, users can initiate the determination of location. For instance, in some embodiments, the location of a person is determined responsive to an input made using a device being carried by that person. For example, a vulnerable person may be carrying a mobile alert indication device and/or a fall/help location device. An input via these devices can cause location to determined. In some embodiments, such an input is made using a user interface of the device (e.g., a touchscreen). In some embodiments, such an input is a biometric input and/or an input received via an accelerometer (e.g., an input indicating the person has fallen).

In the following detailed description, reference is made to the accompanying drawings that form a part hereof. The drawings show by way of illustration how one or more embodiments of the disclosure may be practiced.

These embodiments are described in sufficient detail to enable those of ordinary skill in the art to practice one or more embodiments of this disclosure. It is to be understood that other embodiments may be utilized and that mechanical, electrical, and/or process changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure and should not be taken in a limiting sense.

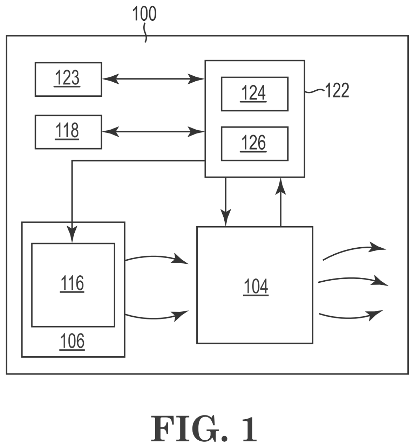

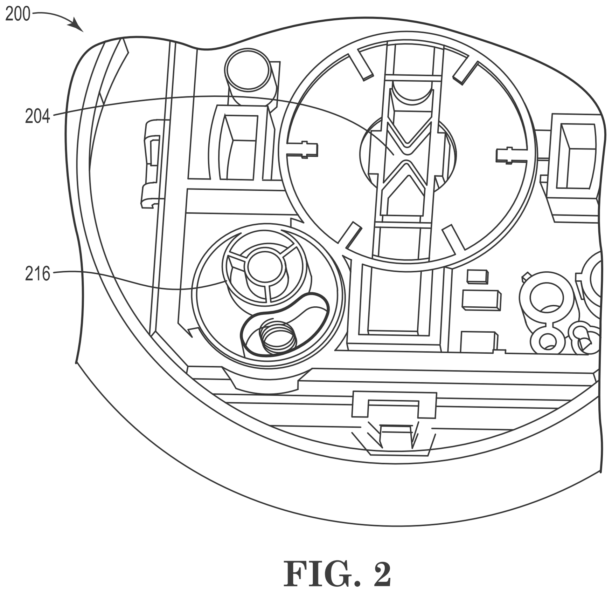

The figures herein follow a numbering convention in which the first digit or digits correspond to the drawing figure number and the remaining digits identify an element or component in the drawing. Similar elements or components between different figures may be identified by the use of similar digits. For example, 104 may reference element "04" in Figure 1, and a similar element may be referenced as 204 in Figure 2.

As used herein, "a", "an", or "a number of" something can refer to one or more such things, while "a plurality of" something can refer to more than one such things. For example, "a number of components" can refer to one or more components, while "a plurality of components" can refer to more than one component.

Figure 1 illustrates a block diagram of an event monitoring and detection device 100 in accordance with one or more embodiments of the present disclosure. The event monitoring and detection device 100 can include a controller (e.g., microcontroller) 122, a beacon 123, a sounder 118, a testing chamber 104, a self-test module 106, and an air movement device 116. It is again noted that while the specific examples of detectors having a self-test module, or those that can perform a self-test procedure, are described herein, embodiments of the present disclosure are not limited to detectors having self-test capabilities.

The controller 122 can include a memory 124 and a processor 126. Memory 124 can be any type of storage medium that can be accessed by processor 126 to perform various examples of the present disclosure. For example, memory 124 can be a non-transitory computer readable medium having computer readable instructions (e.g., computer program instructions) stored thereon that are executable by processor 126 for determining location in a facility using beaconing in accordance with the present disclosure.

Figure 2 illustrates a portion of an example of an event monitoring and detection device 200 in accordance with one or more embodiments of the present disclosure. The event monitoring and detection device 200 can correspond to the event monitoring and detection device 100 of Figure 1 and can be, but is not limited to, a fire and/or smoke detector of a fire control system.

An event monitoring and detection device 200 can sense an event, such as a fire, occurring in a facility and trigger a response to provide a notification of the event to occupants of the facility. An event response can include visual and/or audio alarms, for example. An event response can also notify emergency services (e.g., fire departments, police departments, etc.). In some examples, a plurality of event monitoring and detection devices can be located throughout a facility (e.g., on different floors and/or in different rooms of the facility).

As shown in Figure 2, the event monitoring and detection device 200 can include a testing chamber 204 and an air movement device 216. The testing chamber 204 can be, for instance, an optical scatter chamber and the air movement device 216 can correspond to the air movement device 116 of Figure 1.

The air movement device 216 can control the airflow through the event monitoring and detection device 200, including the testing chamber 204. For example, the air movement device 216 can move particles, gases, and/or aerosol from a first end of the event monitoring and detection device 200 to a second end of the event monitoring and detection device 200. The air movement device 216 can start responsive to a command and can stop responsive to a command and/or after a particular period of time.

An event monitoring and detection device 200 can automatically or upon command perform a self-test procedure. The self-test procedure can include causing a test medium to be generated, initiating a release of the test medium into the testing chamber 204, and causing a sensor to take a reading of the test medium.

The reading can include measuring a value associated with the test medium in the testing chamber 204. The controller can further compare the value associated with the test medium to a threshold value.

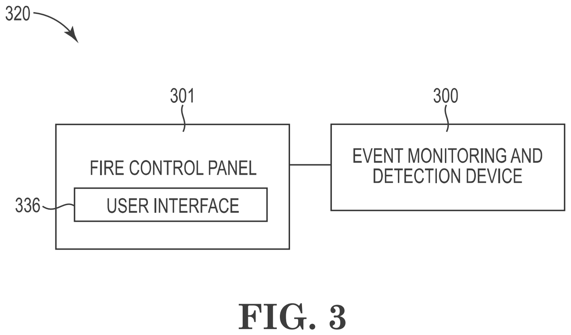

Figure 3 illustrates a block diagram of an alarm system 320 in accordance with one or more embodiments of the present disclosure. The alarm system 320 can include an event monitoring and detection device 300 and a fire control panel 301. The event monitoring and detection device 300 can be, for example, event monitoring and detection device 100 and/or 200 previously described in connection with Figures 1 and 2, respectively.

The fire control panel 301 can be a monitoring device, a fire detection control system, and/or a cloud computing device of the alarm system 320. The fire control panel 301 can be configured to send commands to and/or receive reports from an event monitoring and detection device 300 via a wired or wireless network. For example, the event monitoring and detection device 300 can report a sensor reading during a self-test procedure of the event monitoring and detection device 300. Additionally, in some examples the event monitoring and detection device 300 can report a confirmed event to the fire control panel 301 responsive to a measured value after a particular period of time being greater than a threshold value.

In a number of embodiments, the fire control panel 301 can include a user interface 336. The user interface 336 can be a GUI that can provide and/or receive information to and/or from a user and/or the event monitoring and detection device 300. The user interface 336 can display messages and/or data received from the event monitoring and detection device 300. For example, the user interface 336 can alert a user to an unconfirmed event, a confirmed event, and/or a false alarm reported by the event monitoring and detection device 300.

The networks described herein can be a network relationship through which event monitoring and detection device 300 and/or fire control panel 301 can communicate with each other. Examples of such a network relationship can include a distributed computing environment (e.g., a cloud computing environment), a wide area network (WAN) such as the Internet, a local area network (LAN), a personal area network (PAN), a campus area network (CAN), or metropolitan area network (MAN), among other types of network relationships. For instance, the network can include a number of servers that receive information from and transmit information to event monitoring and detection device 300 and/or fire control panel 301 via a wired or wireless network.

As used herein, a "network" can provide a communication system that directly or indirectly links two or more computers and/or peripheral devices and allows a fire control panel to access data and/or resources on an event monitoring and detection device 300 and vice versa. A network can allow users to share resources on their own systems with other network users and to access information on centrally located systems or on systems that are located at remote locations. For example, a network can tie a number of computing devices together to form a distributed control network (e.g., cloud).

A network may provide connections to the Internet and/or to the networks of other entities (e.g., organizations, institutions, etc.). Users may interact with network-enabled software applications to make a network request, such as to get data. Applications may also communicate with network management software, which can interact with network hardware to transmit information between devices on the network.

In some examples, the network can be used by the event monitoring and detection device 300 and/or the fire control panel 301 to communicate with a remote computing device. The remote computing device can be a personal laptop computer, a desktop computer, a mobile device such as a smart phone, a tablet, a wrist-worn device, and/or redundant combinations thereof, among other types of computing devices. The remote computing device can receive reports from a number of event monitoring and detection devices analogous to event monitoring and detection device 300 and/or a number of fire control panels analogous to fire control panel 301 and transmit commands based on the reports to one or more of the number of event monitoring and detection devices and/or one or more of the number of fire control panels.

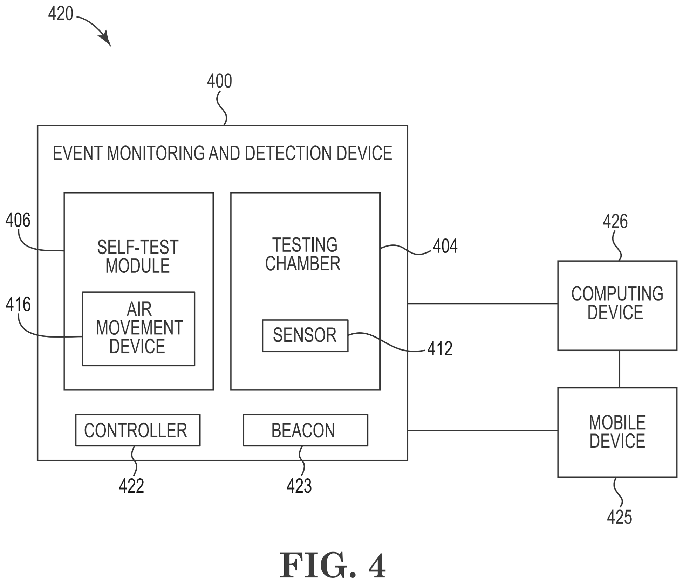

Figure 4 illustrates a system 410 for determining location in a facility using beaconing in accordance with an embodiment of the present disclosure. The system 410 can include an event monitoring and detection device 400, a mobile device, 425, and a remote computing device 426.

In some embodiments, the mobile device 425 is a mobile computing device (e.g., a smart phone, a tablet, a wrist-worn device, etc.). In some embodiments, the mobile device is a dedicated location device (e.g., a personal locator beacon). The type of the mobile device is not limited by embodiments herein and is a device capable of being carried by a person and capable of wirelessly communicating with the beacon 423 and/or the computing device 426.

As illustrated in Figure 4, the event monitoring and detection device 400 can include a self-test module 406, a testing chamber 404, a beacon 423, and a controller 422. The self-test module 406 can include an air movement device 416 and the testing chamber 404 can include a sensor 412. The sensor 412 can be, for example, a heat sensor, a smoke sensor, a particulate matter sensor, and/or any other kind of sensor or combination thereof.

The beacon 423 can be a transmitter configured to wirelessly connect with the mobile device 425 such as a Bluetooth low energy (BLE) beacon, for instance, though embodiments of the present disclosure are not so limited. For instance, the beacon 423 can be a WiFi beacon and/or femtocell, among other beacons. The beacon 423 can be a coin cell device, USB stick, dongle, and/or other form factor. The beacon 423 can be a portion of an indoor proximity system, for instance. The beacon 423 can be one of a plurality of beacons located at a respective location (e.g., position) in the facility.

Beacons, such as the beacon 423, can allow the mobile device 425 to determine its location (e.g., position) within the facility. Beacons can be used to determine a particular room of the facility the mobile device 425 is in based on a wireless connection between the mobile device 425 and at least one beacon within the facility. Where "room" is used in examples discussed herein, it is to be understood that other areas are included. For example, a user can define a custom polygon in the facility and the beacons can determine when a user has entered the polygon.

For example, the beacons in accordance with embodiments herein can each transmit a universally unique identifier recognized by the mobile device 425. When the mobile device 425 receives a transmission from one or more beacons, it can determine when a user associated with (e.g., carrying) the mobile device 425 has entered, exited, or lingered in a location (e.g., a room of the facility). Some embodiments can determine the distance from the beacon(s) 423. In some embodiments, the mobile device 425 can triangulate, trilaterate and/or multilaterate its location using a plurality of beacons.

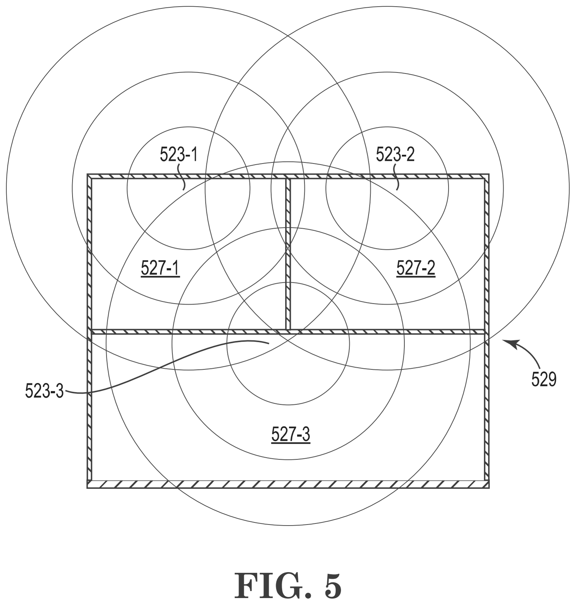

Figure 5 is a cross-sectional view of a portion of a facility 529 having beacons installed therein for determining location within the facility in accordance with an embodiment of the present disclosure. As illustrated in Figure 5, the portion of the example facility 529 includes three rooms: a first room 527-1, a second room 527-2, and a third room 527-3 (cumulatively referred to as "rooms 527"). Each of the rooms 527 has a respective detector having a respective beacon installed therein. As illustrated, the first room 527-1 has a first beacon 523-1, the second room 527-2 has a second beacon 523-2, and the third room 527-3 has a third beacon 523-3 (cumulatively referred to as "beacons 523").

As previously discussed, a 3D model can be generated from a design of the fire system installed in the facility 529 (including the detectors having the beacons 523). The model can include mappings of receiver strengths throughout the facility. These mappings can be extracted and used to determine probable locations of people carrying mobile devices in the facility based on RSSI values of signals received by those devices. Representations of such mappings are shown in the example illustrated in Figure 5 in association with each of the beacons 523. A location of a person carrying a mobile device can be determined based, at least in part, on a correlation between a strength of a signal received by the mobile device and the model.

As previously discussed, embodiments herein provide improved location determination in a number of manners. Some embodiments include tracking historic movements of people throughout the facility over a period of time. In some embodiments, these movements can be used to determine movement patterns, including floors and/or rooms commonly (or rarely) entered by each of those people. For example, a particular person may, over the course of a year, commonly enter the facility through a door in the third room 527-3 and take the elevator, which opens to where is office is in the second room 527-2, without ever entering the first room 527-1. Some embodiments include determining the location of the person based on the correlation between the strength of the received signal and the model and the historical location pattern.

In some cases, if an alert is raised and the location of the person determined using the beacons does not logically follow from their recently tracked location(s), embodiments herein can determine that they are probably not at that location. For instance, if the example person above is initially determined to be located within the first room 527-1 but did not receive full RSSI strength from entering the second floor (via the second room 527-2) prior to an alert being raised, embodiments herein can determine that they are probably not on the second floor, and can use other RSSI values (e.g., those associated with the third beacon 527-3) to determine their probable location.

As previously discussed, field strength at a fixed location can vary over time. Embodiments of the present disclosure can reduce (e.g., minimize) the potential shortcomings of this phenomenon by determining an average RSSI strength over a period of time at a fixed location. Accordingly, anomalous readings can be filtered. In an example, RSSI strength in the western corner of the first room 527-1 can be determined periodically for a given length of time and the average RSSI strength determined therefrom. Accordingly, some embodiments include determining the location of the person based on the correlation between the strength of the received signal and the model and the and the average strength of the signal.

In some embodiments, the volume of beacons signaling can be utilized to determine location. Stated differently, embodiments herein can utilize more than one RSSI value simultaneously. For instance, even if one RSSI value, associated with the third beacon 523-3 on the first floor, is strong, RSSI values received from each of the first beacon 523-1 and the second beacon 523-2 on the second floor may indicate that the person is located on the second floor, even if these signals are each weaker than that from the third beacon 527-3. Stated differently, some embodiments include determining the person's location based on a first quantity of signals that originate from a particular floor exceeding a second quantity of signals that originate from a different floor.

In some embodiments, location determination is improved by performing a calibration procedure. Such a procedure can include, for instance, walking through the facility 529, collecting signal strength values from predefined locations in each of the rooms 527, and associating those values with the corresponding rooms in the model.

To further improve location determination by calibration, embodiments herein can include configuring antenna directional orientation and/or strength in a particular manner. For instance, as illustrated by the representation of the mapping of the signal of the third beacon 527-3, the antenna of the third beacon 527-3 has been oriented downwards to limit leakage to the rooms above. Furthermore, the signal strength of the third beacon 527-3 has been attenuated to avoid it leaking into the rooms 527-1 and 527-2 above. In some embodiments, all of the beacons in a facility may have such a particularized orientation. In some embodiments, less than all of the beacons in a facility may have such a particularized orientation.

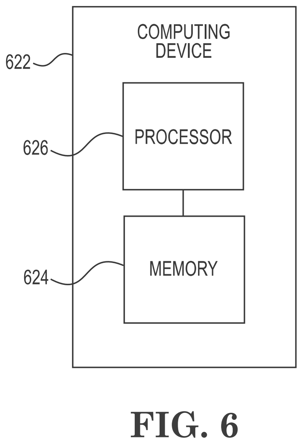

Figure 6 is an example of a computing device 622 for determining location in a facility using beaconing, in accordance with one or more embodiments of the present disclosure. As illustrated in Figure 5, the computing device 622 can include a memory 624 and a processor 626 for determining location in a facility using beaconing, in accordance with the present disclosure.

The memory 624 can be any type of storage medium that can be accessed by the processor 626 to perform various examples of the present disclosure. For example, the memory 624 can be a non-transitory computer readable medium having computer readable instructions (e.g., executable instructions/computer program instructions) stored thereon that are executable by the processor 626 for determining location in a facility using beaconing in accordance with the present disclosure.

The memory 624 can be volatile or nonvolatile memory. The memory 624 can also be removable (e.g., portable) memory, or non-removable (e.g., internal) memory. For example, the memory 624 can be random access memory (RAM) (e.g., dynamic random access memory (DRAM) and/or phase change random access memory (PCRAM)), read-only memory (ROM) (e.g., electrically erasable programmable read-only memory (EEPROM) and/or compact-disc read-only memory (CD-ROM)), flash memory, a laser disc, a digital versatile disc (DVD) or other optical storage, and/or a magnetic medium such as magnetic cassettes, tapes, or disks, among other types of memory.

Further, although memory 624 is illustrated as being located within computing device 622, embodiments of the present disclosure are not so limited. For example, memory 624 can also be located internal to another computing resource (e.g., enabling computer readable instructions to be downloaded over the Internet or another wired or wireless connection).

The processor 626 may be a central processing unit (CPU), a semiconductor-based microprocessor, and/or other hardware devices suitable for retrieval and execution of machine-readable instructions stored in the memory 624.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A method, comprising:
generating a three-dimensional (3D) model of a facility (529);
including, in the model, 3D mappings of a plurality of radio signals respectively associated with a plurality of wireless beacons (423, 523) in the facility (529); and
determining a location of a person carrying a mobile device (425) based, at least in part, on a correlation between a strength of a signal received by the mobile device (425) and the model.

2. The method of claim 1, wherein the method includes generating the model and the 3D mappings from a design of a fire system installed in the facility (529).

3. The method of claim 1, wherein the method includes determining a plurality of locations of the person carrying the mobile device (425) over a period of time.

4. The method of claim 3, wherein the method includes determining a historical location pattern associated with the person.

5. The method of claim 4, wherein the method includes determining the location of the person based on the correlation and the historical location pattern.

6. The method of claim 1, wherein the method includes:
determining an average strength of a signal received at a particular location in the facility (529) over a particular period of time; and
determining the location of the person based on the correlation and the average strength of the signal.

7. The method of claim 1, wherein the method includes determining a particular floor of the facility (529) on which the person is located based on a first quantity of the plurality of signals that originate from the particular floor exceeding a second quantity of the plurality of signals that originate from a different floor.

8. The method of claim 1, wherein the method includes performing a calibration including:
moving the mobile device (425) to a plurality of locations within the facility (529); and
associating a respective signal strength received at each of the plurality of locations in the facility (529) with a corresponding location in the model.

9. The method of claim 8, wherein the method includes determining the location of the person based on the correlation and the calibration.

10. The method of claim 1, wherein the plurality of wireless beacons (423, 523) are each associated with a respective event monitoring and detection device (400) located in a respective room (527) of the facility (529).

11. A system, comprising:
a plurality of wireless devices (423, 523), each installed in a respective room of a facility (529) and configured to communicate a respective radio signal; and
a computing device (426, 622), configured to:
generate a three-dimensional (3D) model of the facility (529), wherein the model includes 3D mappings of the plurality of radio signals; and
determine a location of a person carrying a mobile device (425) in the facility (529) based, at least in part, on a correlation between a strength of a signal received by the mobile device (425) and the model.

12. The system of claim 11, wherein each of the plurality of wireless devices (423, 523) is installed in a particular directional orientation.

13. The system of any one of claims 11-12, wherein the computing device (426, 622) is configured to determine the location of the person based on the correlation and a historical location pattern associated with the person.

14. The system of claim 11, wherein the computing device (426, 622) is configured to determine a particular floor of the facility (529) on which the person is located based on a first quantity of the plurality of signals that originate from the particular floor exceeding a second quantity of the plurality of signals that originate from a different floor.

15. The system of claim 14, wherein a strength of at least one signal of the second quantity of the plurality of signals exceeds a respective strength of each of the first quantity of the plurality of signals.
